# EUROPEAN PATENT APPLICATION

(11) **EP 4 439 122 A1**
(43) Date of publication of application: **02.10.2024**
(21) Application number: 23165095.3
(22) Date of filing: 29.03.2023
(51) Int. Cl.: G01S 13/931, G01S 13/44, G01S 13/87, G01S 13/00

(54) **A VEHICLE RADAR SYSTEM COMPRISING A FIRST ANTENNA ARRANGEMENT AND A SECOND ANTENNA ARRANGEMENT, SEPARATE FROM THE FIRST ANTENNA ARRANGEMENT**

(71) Applicant: Magna Electronics Sweden AB, 447 37 Vårgårda (SE)
(72) Inventor: MOSS, Jonathan, 85716 Unterschleissheim (DE); NAINWAL, Krishnakant, 85716 Unterschleissheim (DE); DOYLE, Scott, Lowell, MA 01854 (US)
(74) Representative: Westpatent AB

(57) **Abstract**

The present disclosure relates to a vehicle radar system (101) comprising a first and a second antenna arrangement (111, 121), where the first antenna arrangement (111) has a first field of view (405) and the second antenna arrangement (111) has a second field of view (406). The first field of view (405) and the second field of view (406) have a common field of view (407) that occupies at least 80% of at least one of the first field (405) of view and the second field of view (406). A first phase center (310) of any array antenna (111T, 111R) comprised in the first antenna arrangement (111) and a second phase center (320) of any array antenna (121T, 121R) comprised in the second antenna arrangement (121) are separated along a vertical extension (V) by a distance dᵥ exceeding 10 times λ where λ is a free-space wavelength that corresponds to a center frequency for at least one intended frequency band.

## Description

### DESCRIPTION OF THE DISCLOSURE

The present disclosure relates to a vehicle radar system comprising a first antenna arrangement and a second antenna arrangement. The first antenna arrangement has a first field of view, and the second antenna arrangement has a second field of view. The first field of view and the second field of view have a common field of view that occupies at least 80% of at least one of the first field of view and the second field of view.

A radar system comprises means for generating radar signals that are transmitted, reflected and received by means of appropriate antennas comprised in the radar system. The signal may for example comprise so-called chirp ramps in an FMCW (Frequency Modulated Continuous Wave) signal with a certain amplitude where the frequency is continuously ramped between two values, the chirp signal thus being in the form of a continuous sinusoid where the frequency varies from a first low frequency to a second high frequency over the course of the ramp. Other modulations are of course possible.

It is desired to increase the performance of radar systems, both regarding range and interference from ground reflections. It is also desired to increase versatility, for example regarding signal generation and signal processing, while keeping the cost low.

The object of the present disclosure is to provide a vehicle radar system that is arranged to provide increased range and to mitigate interference from ground reflections, and at the same time provide versatility, for example regarding signal generation and signal processing, while keeping the cost low.

This object is obtained by means of a vehicle radar system comprising a first antenna arrangement and a second antenna arrangement, separate from the first antenna arrangement. The first antenna arrangement has a first field of view and the second antenna arrangement has a second field of view, where the first field of view and the second field of view have a common field of view that occupies at least 80% of at least one of the first field of view and the second field of view. Each antenna arrangement is connected to a corresponding signal generator, where the signal generators are adapted to run independently of each other. A phase center of any array antenna comprised in the first antenna arrangement and another phase center of any array antenna comprised in the second antenna arrangement are separated along a vertical extension by a distance exceeding 10 times λ where λ is a free-space wavelength that corresponds to a center frequency for at least one intended frequency band.

Since the antenna arrangements are separated along the vertical extension as described above, an extended detection range is provided and a considerable reduction the detrimental effect of multipath holes from ground bounces is enabled.

According to some aspects, the first antenna arrangement has a first antenna aperture with a first boresight direction and the second antenna arrangement has a second antenna aperture with a second boresight direction, where the boresight directions differ by an angle ϕ that falls below 20°.

This means that the separation between the first antenna arrangement and the second antenna arrangement is kept relatively small along a horizontal extension that is perpendicular to the vertical extension.

According to some aspects, the vehicle radar system further comprises a first radar transceiver unit that comprises a first transmitter unit, a first receiver unit and a first processor unit. According to some further aspects, the vehicle radar system also comprises a second radar transceiver unit that comprises a second transmitter unit, a second receiver unit and a second processor unit.

According to some aspects, one processor unit is a master processor unit and the other processor unit is a slave processor unit, where the master processor unit is adapted to form a combined result.

This means that the slave processor unit would pass sufficient quality of signal information such that the master processor unit is able to fuse the information from the two sub-systems.

According to some aspects, the master processor unit is adapted to combine receiver channel information comprising received amplitude and phase, enabling the master processor unit to provide combined angle processing.

Combined angle processing can comprise super-resolution which enables separation of target objects from a single range-Doppler cell that could not otherwise be separated using conventional azimuth processing.

According to some aspects, the processor units alternate between being master processor unit and slave processor unit. In this way, processor workload is shared between the processor units.

According to some aspects, the radar transceiver units are formed as corresponding system-on-chip, SOC, units or in a common SOC unit. In this manner, the radar transceiver units are realized in a very compact and efficient manner. According to some aspects, the radar transceiver units can be formed as one or more Monolithic Microwave Integrated Circuits, MMICs.

According to some aspects, the first antenna arrangement comprises a first transmitting array antenna and first receiving array antenna and where the second antenna arrangement comprises a second transmitting array antenna and second receiving array antenna.

In this manner, since the antenna arrangements are separated along the vertical extension as described above, an extended detections range is provided and a considerable reduction of the detrimental effect of multipath holes from ground bounces is enabled.

According to some aspects, the radar transceiver units are adapted to generate corresponding radar signal waveforms and to operate in mutually separated frequency bands.

According to some aspects, the processor units are adapted to control the corresponding transmitter units to operate in an interleaved manner such that only one transmitter unit at a time generates radar signal waveforms.

When the transmitter units typically operate with only a 50% on-time, which means that interference from other radars is avoided. From a regulatory approval perspective this is beneficial since sometimes only a certain maximum instantaneous transmission power is allowed.

According to some aspects, the first processor unit is adapted to control the first transmitter unit to generate a first radar signal waveform, and the second processor unit is adapted to control the second transmitter unit to generate a second radar signal waveform. Furthermore, the radar signal waveforms are complementary. This means that range and Doppler detection accuracy is improved when a target is measured with both waveforms in the same radar cycle.

According to some aspects, the first antenna arrangement is adapted for a first polarization and the second antenna arrangement is adapted for a second polarization that is different from the first polarization. In this manner, polarization diversity is enabled.

This object is also obtained by means of methods associated with the above advantages.

### BRIEF DESCRIPTION OF THE DRAWINGS

The present disclosure will now be described more in detail with reference to the appended drawings, where:
- Figure 1: shows a schematic top view of a vehicle;
- Figure 2: schematically illustrates a first simplified schematic of a vehicle radar system;
- Figure 3: schematically illustrates a second simplified schematic of the vehicle radar system;
- Figure 4: schematically illustrates a simplified top view of the antenna arrangements;
- Figure 5: schematically illustrates a simulation showing a received signal level from a target object as a function of distance.
- Figure 6A: schematically illustrates a graphic representation of a first radar signal waveform according to a first example;
- Figure 6B: schematically illustrates a graphic representation of a second radar signal waveform according to the first example;
- Figure 7A: schematically illustrates a graphic representation of a first radar signal waveform according to a second example;
- Figure 7B: schematically illustrates a graphic representation of a second radar signal waveform according to the second example;
- Figure 8: schematically illustrates a processor unit;
- Figure 9: schematically illustrates a computer program product;
- Figure 10: schematically illustrates a graphic representation of radar signal waveforms according to a third example; and
- Figure 11: illustrates methods according to the present disclosure.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

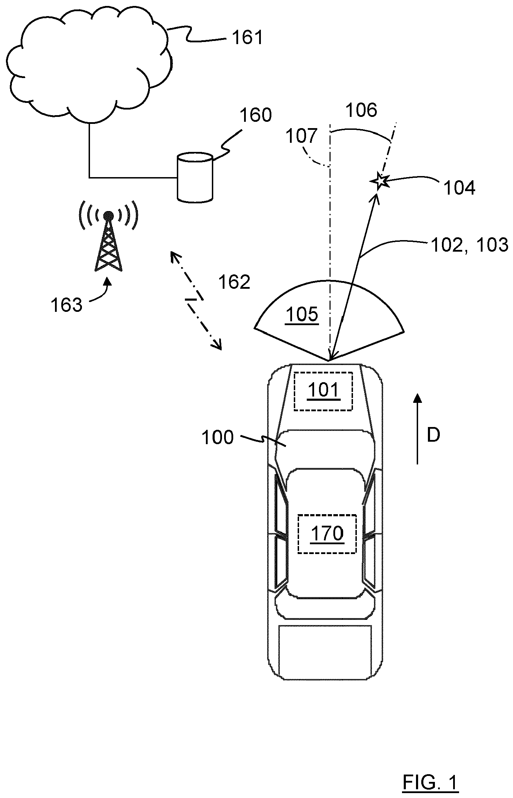

Figure 1 shows a vehicle 100 that has a forward running direction D and is equipped with a vehicle radar system 101. Some parts of the radar system functionality may even be comprised in a remote server 160 or cloud-based resource 161 connected to the vehicle 100 via wireless link 162, for example via a communication system 163.

According to an example, the vehicle radar system 101 is arranged for generating and transmitting radar signals in the form of frequency modulated continuous wave (FMCW) signals 102, sometimes also referred to as radar chirp signals, and to receive reflected radar signals 103, where the transmitted signals 102 have been reflected by an object 104.

The present disclosure is not limited to FMCW radar waveforms. Rather, the general concepts and techniques disclosed herein can be adapted and applied to many different radar waveforms.

The vehicle radar system 101 is associated with an effective field of view 105 and by means of signal processing, range and target angle 106 relative a reference line 107, to detected objects 104 can be determined.

As noted above, the vehicle radar system may be connected via wireless link 162 to a remote server 160, which in turn may be comprised in a cloud-based resource 161 or remote network. This server 160 and network may be configured to assist the vehicle 100 in performing various operations such as radar signal processing, interference mitigation, beamforming, and the like.

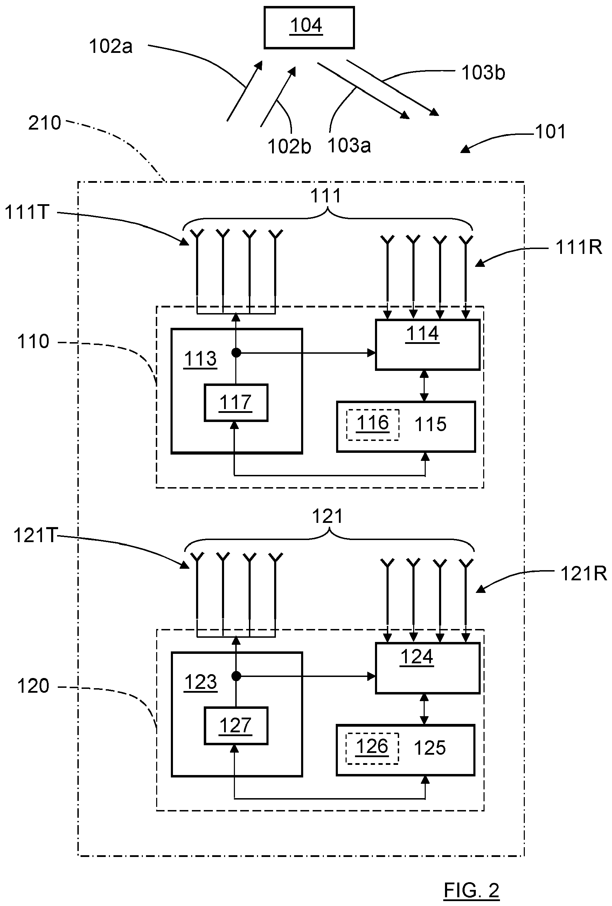

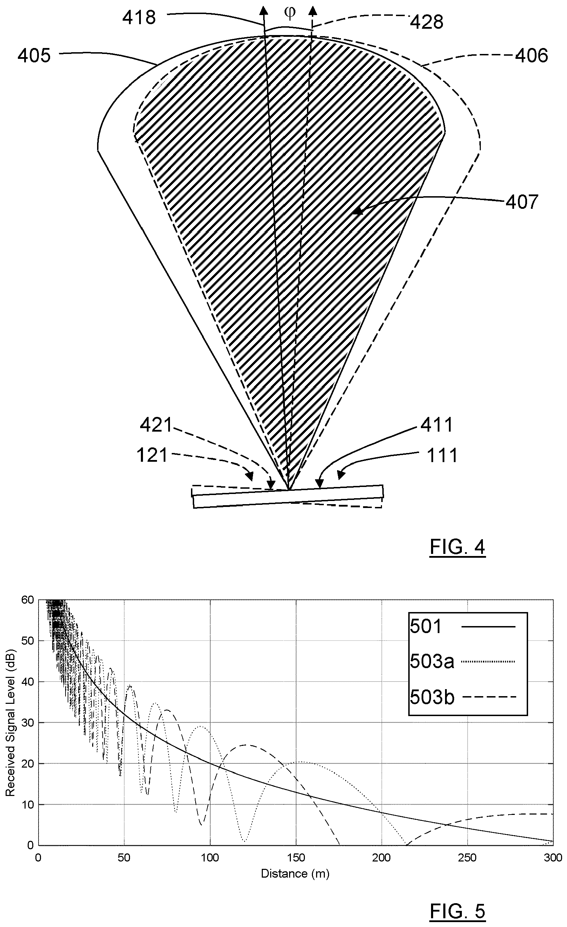

Figure 2 illustrates the vehicle radar system 101 more in detail, where the vehicle radar system 101 comprises a first antenna arrangement 111 and a second antenna arrangement 121, separate from the first antenna arrangement 111. With reference also to Figure 4, the first antenna arrangement 111 has a first field of view 405 and the second antenna arrangement 111 has a second field of view 406, where the first field of view 405 and the second field of view 406 have a common field of view 407 that occupies at least 80% of at least one of the first field 405 of view and the second field of view 406. The common field of view 407 is marked with diagonal lines in Figure 4 and according to some aspects presents an overlapping field of view 407 where the overlap is at least 80%. According to some aspects, the fields of view 405, 406 shown lie in an azimuth plane that runs perpendicular to the vertical extension V. The fields of view 405, 406 form the effective field of view 105 shown in Figure 1.

According to some aspects, in this context it should be noted that the term "field of view" can be regarded as the extent of an observable environment, typically defined by an upper and lower azimuth angle and an upper and lower elevation angle. The upper and lower azimuth and elevation ranges are typically defined by when the signal return of a target has reduced by a certain amount, for example by 10dB. According to some further aspects, a field of view of an antenna arrangement 111, 121 is related to the field of view of at least one antenna arrangement that is comprised in that antenna arrangement 111, 121.

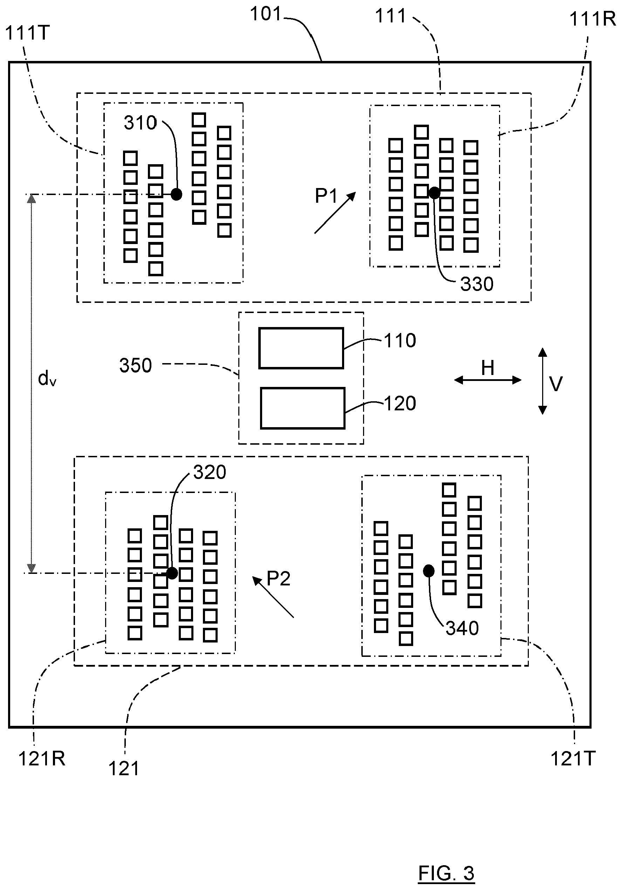

According to the present disclosure, with reference also to Figure 3, a phase center 310 of any array antenna 111T, 111R comprised in the first antenna arrangement 111 and another phase center 320 of any array antenna 121T, 121R comprised in the second antenna arrangement 121 are separated along a vertical extension V by a distance dᵥ exceeding 10 times λ where λ is a free-space wavelength that corresponds to a center frequency for at least one intended frequency band.

According to some aspects, this means that a vertical distance dᵥ between any one of the phase centers in the first antenna arrangement 111 and any one of the phase centers in the second antenna arrangement 121 exceeds 10 times λ. An antenna arrangement may comprise one or more phase centers, depending on the number of array antennas that are comprised in the antenna arrangement, each array antenna normally having a corresponding phase center.

According to some aspects, for the example illustrated in Figure 3, the first antenna arrangement 111 comprises a first transmitting array antenna 111T and first receiving array antenna 111R. The second antenna arrangement 121 comprises a second transmitting array antenna 121T and second receiving array antenna 121R.

Here, there is a distance dᵥ that separates a first phase center 310 of the first transmitting array antenna 111T and a second phase center 320 of the second receiving array antenna 121R. This is of course only an example, the distance dᵥ can be measured between the phase center 310, 330 of any antenna arrangement 111T, 111R in the first antenna arrangement 111, and the phase center 320, 340 of any antenna arrangement 121T, 121R in the second antenna arrangement 121.

Furthermore, here there are two array antennas 111T 111R; 121T, 121R in each antenna arrangement 111, 121, but there may be more or fewer array antennas in each antenna arrangement 111, 121, although there is at least one array antenna in each antenna arrangement 111, 121, and that there is at least one transmitting array antenna and one receiving array antenna in the vehicle radar system 101.

In this manner, since the antenna arrangements 111, 121 are separated along the vertical extension V as described above, an extended detections range is provided and a considerable reduction of the detrimental effect of multipath holes from ground bounces is enabled.

Automotive radars generally transmit one or more radar signals, for example FMCW chirps, from transmission array antennas 111T, 121T and receive reflected signals in reception array antennas 111R, 121R. In Figure 2 there is a first transmitted signal 102a that is transmitted by the first transmitting array antenna 111T and a second transmitted signal 102b that is transmitted by the second transmitting array antenna 121T.

There are also received reflected radar signals 103a, 103b, where the transmitted signals 102a, 102b have been reflected by a target object 104. Here there is a first reflected radar signal 103a that is received by the first receiving array antenna 111R and a second reflected radar signal 103b that is received by the second receiving array antenna 121R.

Figure 5 illustrates a simulation showing a received signal level from a target as a function of distance. A solid line shows the first signal level 501 without reflections from the ground surface. There is further a dotted line that shows a first signal level 503a of the received first reflected radar signal 103a and a dashed line that shows a second signal level 503b of the received second reflected radar signal 103b.

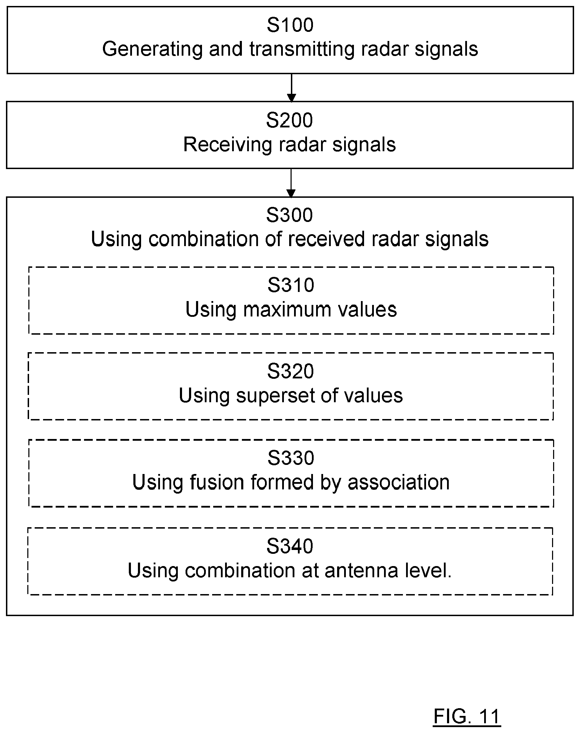

At ranges when the signal gets too low, below a "detection threshold", a target object 104 will be lost and thus not detected. Hence by having two locations where the target object 104 is lost, the vehicle radar system 101 is able to detect the target object 104 continuously and benefit from the local peaks of the reflected radar signal 103a, 103b. How this can be accomplished will be discussed later when the method illustrated in Figure 11 is disclosed.

The vehicle radar system 101 can be regarded as comprising two sub-systems of antenna arrangement 111, 121 and radar transceiver units 110, 120 are formed, where these two sub-systems 110, 111; 120, 121 could operate in their own right as standalone systems but in doing so would suffer from interference from ground bounce signals which have the effect of making some targets undetectable at certain ranges. The use of two radar sub-systems 110, 111; 120, 121 according to the above creates height diversity which thus mitigates against ground bounce interference.

Furthermore, there is benefit in that for each antenna arrangement 111, 121, the phase center 330, 320 of the receiving array antenna 111R, 121R is at roughly the same vertical height as the phase center 310, 340 of the corresponding transmitting array antenna 111T, 121T. This is due to that multipath interference occurs equally on both antenna arrangements 111, 121, creating a well-defined, narrow gap in the detection pattern.

According to some aspects, for the example illustrated in Figure 4, the first antenna arrangement 111 has a first antenna aperture 411 with a first boresight direction 418 and the second antenna arrangement 111 has a second antenna aperture 421 with a second boresight direction 428. The boresight directions 418, 428 differ by an angle ϕ that falls below 20°. According to some aspects, as indicated previously, the view of Figure 4 illustrates an azimuth plane that is perpendicular to the vertical extension V.

This means that the separation between the first antenna arrangement 111 and the second antenna arrangement 121 is kept relatively small along a horizontal extension that is perpendicular to the vertical extension V.

According to some aspects, as shown in Figure 2, the vehicle radar system 101 further comprises a first radar transceiver unit 110 that comprises a first transmitter unit 113, a first receiver unit 114 and a first processor unit 115. The vehicle radar system 101 also comprises a second radar transceiver unit 120 that comprises a second transmitter unit 123, a second receiver unit 124 and a second processor unit 125. According to some aspects, each transmitter unit 113, 123 comprises a corresponding signal generator 117, 127.

Each antenna arrangement 111, 121 is connected to a corresponding signal generator 117, 127, where the signal generators 117, 127 are adapted to run independently of each other. This enables the antenna arrangements to transmit radar waveforms that are independent of each other time and/or frequency. Examples will be discussed later.

According to some aspects, one processor unit 115, 125 is a master processor unit and the other processor unit 125, 115 is a slave processor unit, where the master processor unit 115, 125 is adapted to form a combined result.

The slave processor unit, for example the first processor unit 115, would pass sufficient quality of signal information such that the master processor unit, for example the second processor unit 125, is able to fuse the information from the two sub-systems 110, 111; 120, 121 together. Such a fusion may take place in a number of different previously well-known ways. In an uncomplicated example, the master processor unit 125 could output to a vehicle safety system 170 a super-set of all detections from both the master processor unit 125 and the slave processor unit 115.

A more advanced fusion example could be use an association function to combine detections from the same target object 104 thereby improving the accuracy and reducing the number of detection points sent to the vehicle safety system 170. An even more advanced approach would be for the master processor unit 125 to use receiver channel information for one target object 104 from the slave processor unit 115 in order to combine with its own receiver channel information for the same target object 104 and perform either conventional angle of arrival processing or super-resolution.

This means that, according to some aspects, the master processor unit 125 is adapted to combine receiver channel information comprising received amplitude and phase, enabling the master processor unit 125 to provide combined angle processing, which could comprise super-resolution.

In the case of super-resolution, several known methods are available that are based on forming a covariance matrix from the channel information in one range-Doppler cell, which in this case could be combined from multiple sub-systems. The receiving array antennas 111R, 121R may need to be identical to enable that super-resolution could function, for example the same sparse receiver antenna array could be used for the receiving array antennas 111R, 121R, with the second receiving array antenna 121R offset vertically and possibly also horizontally as indicated in Figure 3. According to some aspects, receiver channel information corresponding at least one range-Doppler cell is conveyed from the master processor unit 125 to the slave processor unit 115, and then combined at the master processor unit 125 to provide output regarding a detection or tracked target object 104 with improved accuracy and improved separation in azimuth.

With super-resolution it is possible to separate target objects from a single range-Doppler cell that could not otherwise be separated using conventional azimuth processing. Such systems benefit from any many observations of a scene as possible.

According to some aspects, the processor units 115, 125 alternate between being master processor unit and slave processor unit.

In this way, processor workload is shared between the processor units 115, 125.

According to some aspects, the radar transceiver units 110, 120 are formed as corresponding system-on-chip, SOC, units or in a common SOC unit 350. In this manner, the radar transceiver units 110, 120 are realized in a very compact and efficient manner.

According to some aspects, each processor unit 115, 125 comprises a corresponding Digital Signal Processor, DSP, arrangement 116, 126 that is adapted to process signals input from the corresponding receiver unit 114, 124. This means that the DSP functionality is integrated in the processor units 115, 125.

According to some aspects, each processor unit 115, 125 is adapted to control the corresponding transmitter unit 113, 123 and the corresponding receiver unit 114, 124. This enables a compact control arrangement for the SOC 350 o SOCs 110, 120.

According to some aspects, the radar transceiver units 110, 120 are adapted to generate corresponding radar signal waveforms 102a, 102b and to operate in mutually separated frequency bands, according to some aspects different sub-bands like 76-77GHz and 80-81GHz or a combination of 77GHz and 24GHz.

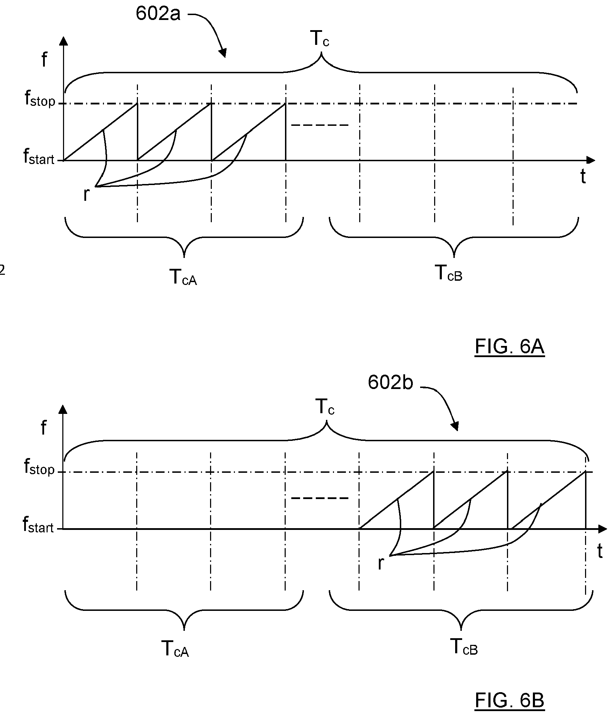

According to some aspects, with reference also to Figure 6A and Figure 6B that illustrate a first example, the processor units 115, 125 are adapted to control the corresponding transmitter units 113, 123 to operate in an interleaved manner such that only one transmitter unit 113, 123 at a time generates radar signal waveforms 602a, 602b. For example, during one or more certain times only the first transmitter unit 113 generates radar signal waveforms 602a, and during one or more other times, only the second transmitter unit 123 generates radar signal waveforms 602b.

Such times can be a radar cycle time T_{c} such that every second cycle only one of the transmitter units 113, 123 generates radar signal waveforms 602a, 602b. Alternatively, there can be interleaved subsets, or pulses, of radar signal waveforms 602a, 602b within a radar cycle, having a radar cycle time T_{c}. This is illustrated in Figure 6A and Figure 6B, where the radar cycle time T_{c} is divided into two parts, a first part T_{cA} where only the first transmitter unit 113 generates radar signal waveforms 602a, here in the form of FMCW ramps r, and a second part T_{cB} where only the second transmitter unit 123 generates radar signal waveforms 602b, also here in the form of FMCW ramps r.

A benefit of using this approach is that by noting that the transmitter units 113, 123 typically operate with only a 50% on-time, which means that the RF signal is only being produced for 25ms of a 50ms cycle period. By offsetting the radar transceiver units 110, 120 it can be ensured that only one transceiver unit 110, 120 is generating a radar signal waveform at any particular time. This has important benefits from a perspective of avoiding interference from other radars and from a regulatory approval perspective which sometimes defines a maximum instantaneous transmission power.

As an alternative, the two radar transceiver units 110 and 120 can be synchronized in time and frequency such that the receiving array antennas 111T, 121T can be used simultaneously to receive the signal sent from either or both transmitting array antennas 111T, 121T.

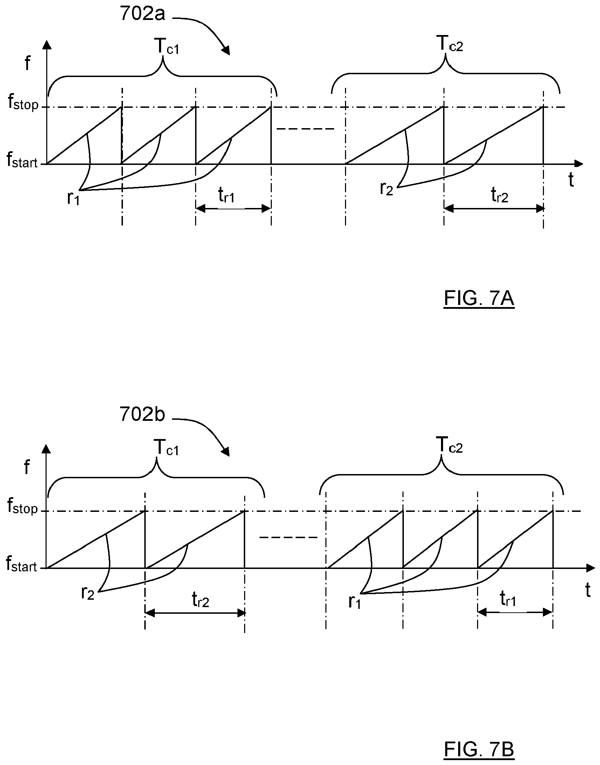

According to some aspects, with reference to Figure 7A and Figure 7B that illustrate a second example, the radar signal waveforms 702a, 702b operate with FMCW modulation, where a first radar signal waveform 702a alternates each cycle T_{c1}, T_{c2} between first frequency ramps r₁ with a first duration time tᵣ₁ and second frequency ramps r₂ with a second duration time tᵣ₂. A second radar signal waveform 702b alternates each corresponding cycle T_{c1}, T_{c2} between the second frequency ramps r₂ with the second duration time tᵣ₂ and the first frequency ramps r₁ with the first duration time tᵣ₁, the first duration time tᵣ₁ being different from the second duration time tᵣ₂.

According to some aspects, the radar waveforms generated by the transmitter units 113, 123 are different within one radar cycle.

According to some aspects, the first processor unit 115 is adapted to control the first transmitter unit 113 to generate a first radar signal waveform 102a, and the second processor unit 125 is adapted to control the second transmitter unit 123 to generate a second radar signal waveform 102b, where the radar signal waveforms 102a, 102b are complementary.

According to some aspects, the radar signal waveforms 102a, 102b operate with stepped frequency modulated continuous wave, SFMCW, modulation.

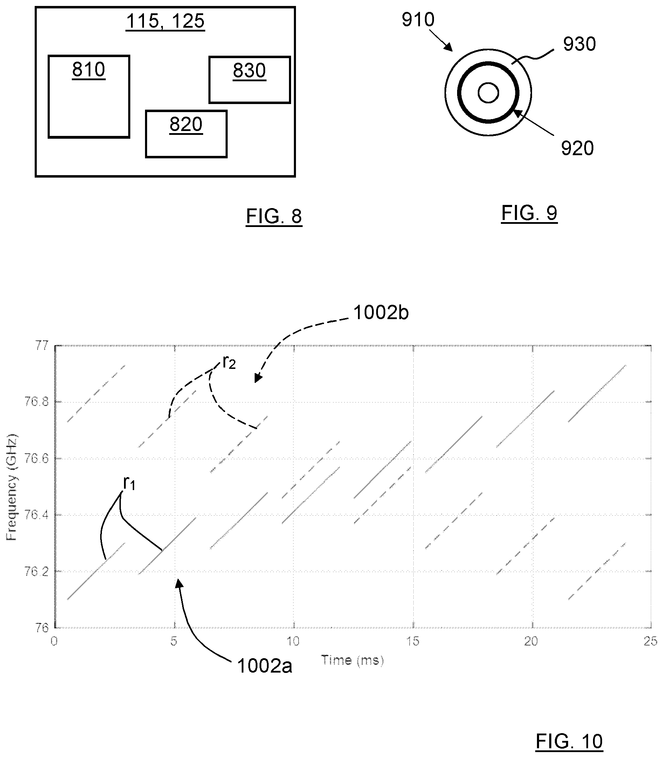

An example of this is shown in Figure 10, that illustrates a third example, where there is a first radar signal waveform 1002a and a second radar signal waveform 1002b, where the first radar signal waveform 1002a comprises a plurality of first frequency ramps r₁ and the second first radar signal waveform 1002b comprises a plurality of second frequency ramps r₂, each plurality of frequency ramps r₁, r₂ forming an SFMCW waveform.

According to some aspects, the first frequency ramps r₁ step up linearly in frequency, from a low frequency to a high frequency, to occupy the present bandwidth, in this example 1GHz, during a certain time period, in this each 25ms measurement period. The second frequency ramps r₂ use the same band but step down linearly in frequency, from a high frequency to a low frequency. The two waveforms 1002a, 1002b could be considered complementary and the benefit would be that the range and Doppler detection accuracy is improved when a target is measured with both waveforms 1002a, 1002b in the same radar cycle.

The above values are of course only examples, and in practice there may be many more ramps per 25ms measurement time, such as 1024 but only 8 ramps are shown for clarity of explanation. The 1GHz band shown can be wider or more narrow, and other frequency intervals as well as other frequency bands are conceivable.

According to some aspects, the first antenna arrangement 111 is adapted for a first polarization P1 and the second antenna arrangement 121 is adapted for a second polarization P2 that is different from the first polarization P1, for example orthogonal to first polarization P1. In this manner, polarization diversity is enabled.

With refence to Figure 11, the present disclosure also relates to a method for a vehicle radar system 101. The method comprises generating and transmitting S100 radar signals 102 using a first radar transceiver 110 with a first signal generator 117, a second radar transceiver 120 with a second signal generator 127, a first antenna arrangement 111 and second antenna arrangement 121, and receiving S200 radar signals 103; 503a, 503b using the antenna arrangements 111, 121 and radar transceivers 110, 120. Each antenna arrangement 111, 121 is connected to a corresponding signal generator 117, 127, where the signal generators 117, 127 are adapted to run independently of each other.

A phase center 310 of any array antenna 111T, 111R comprised in the first antenna arrangement 111 and another phase center 320 of any array antenna 121T, 121R comprised in the second antenna arrangement 121 are separated along a vertical extension V by a distance dᵥ exceeding 10 times λ where λ is a free-space wavelength that corresponds to a center frequency for at least one intended frequency band. The method further comprises using S300 a combination of the received radar signals 103; 503a, 503b to compensate for radar signal road reflections.

According to some aspects, using S300 a combination of the received radar signals 103; 503a, 503b comprises at least one of
- using S310 the maximum values of the received radar signals 103; 503a, 503b;
- using S320 a superset of the values of the received radar signals 103; 503a, 503b, where the superset comprises a full list of detections from both radar transceivers 110, 120;
- using S330 a fusion formed by an association of equivalent values of the received radar signals 103; 503a, 503b and a combination of detection parameters to create a single detection with best estimates of all associated parameters; and
- using S340 a combination of the received radar signals 103; 503a, 503b at an antenna level.

Using S310 the maximum values may include associating targets from both radar transceivers 110, 120.

The detections parameters used can for example include at least one of azimuth angle to target object and relative target object velocity.

Using the combination S340 of the received radar signals 103; 503a, 503b at an antenna level, the angle of angles of detections within a range-doppler cell may be more accurately estimated. For example, this could be through the use of a combined covariance matrix followed by the use of QR decomposition.

The obtained result is suitably output to the vehicle safety system 170.

Figure 8 schematically illustrates, in terms of a number of functional units, the components of a processor unit 115, 125 according to an embodiment. Each processor unit 115, 125 may be constituted by one or more processor unit parts that can be separate from each other. Although each processor unit 115, 125 is indicated to be positioned in the vehicle 100, some processor unit parts may for example be comprised in a remote server 160 or elsewhere.

Processing circuitry 810 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 820. The processing circuitry 810 may further be provided as at least one application specific integrated circuit (ASIC), or field programmable gate array (FPGA) .

Particularly, the processing circuitry 810 is configured to cause the processor unit 115, 155 to perform a set of operations, or steps. These operations, or steps, were discussed above in connection to the various vehicle radar systems and methods. For example, the storage medium 820 may store the set of operations, and the processing circuitry 810 may be configured to retrieve the set of operations from the storage medium 820 to cause the processor unit 115, 125 to perform the set of operations. The set of operations may be provided as a set of executable instructions. Thus, the processing circuitry 810 is thereby arranged to execute methods and operations as herein disclosed.

The storage medium 820 may also comprise persistent storage, which, for example, can be any single one or combination of magnetic memory, optical memory, solid state memory or even remotely mounted memory.

Each processor unit 115, 125 may further comprise a communications interface 830 for communications with at least one other unit such as for example other parts in the radar transceiver units. As such, the communications interface 830 may comprise one or more transmitters and receivers, comprising analogue and digital components and a suitable number of ports for wired or wireless communication.

The processing circuitry 810 is adapted to control the general operation of ego processor unit 115, 125 e.g. by sending data and control signals to the external unit and the storage medium 820, by receiving data and reports from the external unit, and by retrieving data and instructions from the storage medium 820. Other components, as well as the related functionality, of each processor unit 115, 125 are omitted in order not to obscure the concepts presented herein.

Figure 9 shows a computer program product 910 comprising computer executable instructions 920 arranged on a computer readable medium 930 to execute any of the methods disclosed herein.

The present disclosure is not limited the examples disclosed above, but may vary freely within the scope of the appended claims. For example, the radar vehicle radar system 101 can be an FMCW radar transceiver arrangement, but other vehicle radar modulations are also conceivable such as for example OFDM (Orthogonal Frequency-Division Multiplexing).

The array antennas 111R, 111T; 121R, 121T may according to some aspects be regarded as antenna devices 111R, 111T; 121R, 121T, and can be realized in many different ways. For example, patch antennas, dipole antennas and slot antennas, and combinations thereof, are conceivable.

## Claims

1. A vehicle radar system (101) comprising a first antenna arrangement (111) and a second antenna arrangement (121), separate from the first antenna arrangement (111), where the first antenna arrangement (111) has a first field of view (405) and the second antenna arrangement (111) has a second field of view (406), where the first field of view (405) and the second field of view (406) have a common field of view (407) that occupies at least 80% of at least one of the first field (405) of view and the second field of view (406),
**characterized in that** each antenna arrangement (111, 121) is connected to a corresponding signal generator (117, 127), where the signal generators (117, 127) are adapted to run independently of each other, where a phase center (310) of any array antenna (111T, 111R) comprised in the first antenna arrangement (111) and another phase center (320) of any array antenna (121T, 121R) comprised in the second antenna arrangement (121) are separated along a vertical extension (V) by a distance dᵥ exceeding 10 times λ where λ is a free-space wavelength that corresponds to a center frequency for at least one intended frequency band.

2. The vehicle radar system (101) according to claim 1, wherein the first antenna arrangement (111) has a first antenna aperture (411) with a first boresight direction (418) and the second antenna arrangement (111) has a second antenna aperture (421) with a second boresight direction (428), where the boresight directions (418, 428) differ by an angle ϕ that falls below 20°.

3. The vehicle radar system (101) according to any one of the claims 1 or 2, further comprising
- a first radar transceiver unit (110) that comprises a first transmitter unit (113), a first receiver unit (114) and a first processor unit (115), and
- a second radar transceiver unit (120) that comprises a second transmitter unit (123), a second receiver unit (124) and a second processor unit (125).

4. The vehicle radar system (101) according to claim 3, wherein one processor unit (115, 125) is a master processor unit and the other processor unit (125, 115) is a slave processor unit, where the master processor unit (115, 125) is adapted to form a combined result.

5. The vehicle radar system (101) according to claim 4, wherein the master processor unit (115, 125) is adapted to combine receiver channel information comprising received amplitude and phase, enabling the master processor unit (115, 125) to provide combined angle processing.

6. The vehicle radar system (101) according to any one of the claims 4 or 5, wherein the processor units (115, 125) alternate between being master processor unit and slave processor unit.

7. The vehicle radar system (101) according to any one of the claims 3-6, wherein the radar transceiver units (110, 120) are formed as corresponding system-on-chip, SOC, units or in a common SOC unit (350).

8. The vehicle radar system (101) according any one of the previous claims, wherein the first antenna arrangement (111) comprises a first transmitting array antenna (111T) and first receiving array antenna (111R) and where the second antenna arrangement (121) comprises a second transmitting array antenna (121T) and second receiving array antenna (121R).

9. The vehicle radar system (101) according to any one of the previous claims, wherein the radar transceiver units (110, 120) are adapted to generate corresponding radar signal waveforms (102a, 102b) and to operate in mutually separated frequency bands.

10. The vehicle radar system (101) according to any one of the previous claims, wherein the processor units (115, 125) are adapted to control the corresponding transmitter units (113, 123) to operate in an interleaved manner such that only one transmitter unit (113, 123) at a time generates radar signal waveforms (602a, 602b).

11. The vehicle radar system (101) according to any one of the previous claims, wherein the first processor unit (115) is adapted to control the first transmitter unit (113) to generate a first radar signal waveform (102a), and where the second processor unit (115) is adapted to control the second transmitter unit (123) to generate a second radar signal waveform (102b), where the radar signal waveforms (102a, 102b) are complementary.

12. The vehicle radar system (101) according to claim 10, wherein the radar signal waveforms (102a, 102b) operate with stepped frequency modulated continuous wave, SFMCW, modulation.

13. The vehicle radar system (101) according to any one of the previous claims, wherein the first antenna arrangement (111) is adapted for a first polarization (P1) and the second antenna arrangement (121) is adapted for a second polarization (P2) that is different from the first polarization (P1).

14. A method for a vehicle radar system (101), the method comprising
generating and transmitting (S100) radar signals (102) using a first radar transceiver (110) with a first signal generator (117), a second radar transceiver (120) with a second signal generator (127), a first antenna arrangement (111) and second antenna arrangement (121);
receiving (S200) radar signals (103; 503a, 503b) using the antenna arrangements (111, 121) and radar transceivers (110, 120) ;
where each antenna arrangement (111, 121) is connected to a corresponding signal generator (117, 127), where the signal generators (117, 127) are used to run independently of each other,
where a phase center (310) of any array antenna (111T, 111R) comprised in the first antenna arrangement (111) and another phase center (320) of any array antenna (121T, 121R) comprised in the second antenna arrangement (121) are separated along a vertical extension (V) by a distance dᵥ exceeding 10 times λ where λ is a free-space wavelength that corresponds to a center frequency for at least one intended frequency band, the method further comprising
using (S300) a combination of the received radar signals (103; 503a, 503b) to compensate for radar signal road reflections.

15. The method according to claim 14, wherein using (S300) a combination of the received radar signals (103; 503a, 503b) comprises at least one of
using (S310) the maximum values of the received radar signals (103; 503a, 503b);
using (S320) a superset of the values of the received radar signals (103; 503a, 503b) where the superset comprises a full list of detections from both radar transceivers (110, 120);
using (S330) a fusion formed by an association of equivalent values of the received radar signals (103; 503a, 503b) and a combination of detection parameters to create a single detection with best estimates of all associated parameters;
using (S340) a combination of the received radar signals (103; 503a, 503b) at an antenna level.
